# EUROPÄISCHE PATENTSCHRIFT

(11) **EP 1 518 760 B1**
(45) Veröffentlichungstag und Bekanntmachung des Hinweises auf die Patenterteilung: **01.03.2006**
(21) Anmeldenummer: 04022503.9
(22) Anmeldetag: 22.09.2004
(51) Int. Cl.: B60R 21/13

(54) **Baueinheit für ein Überrollschutzsystem für Kraftfahrzeuge**
Modular unit for a rollbar protection system for vehicles
Unité modulaire pour un système d'arceau de sécurité pour véhicules automobiles

(30) Priorität: 25.09.2003 DE 10344446
(43) Veröffentlichungstag der Anmeldung: 30.03.2005
(73) Patentinhaber: ISE Innomotive Systems Europe GmbH, 51702 Bergneustadt (DE)
(72) Erfinder: Latussek, Holger, 51702 Bergneustadt (DE)
(74) Vertreter: Fuchs Mehler Weiss & Fritzsche

(56) Entgegenhaltungen:
- DE-A- 4 342 400
- DE-A- 19 905 578
- DE-A- 19 943 582
- DE-C- 19 838 989
- DE-C- 19 910 007
- DE-U- 20 103 001

## Beschreibung

Die Erfindung bezieht sich auf eine Baueinheit, ausgebildet für die Aufnahme von zwei nebeneinander sitzbezogen angeordneten, aufstellbaren Überrollkörpem eines Überrollschutzsystems für Kraftfahrzeuge.

Überrollschutzsysteme dienen zum Schutz der Insassen in Kraftfahrzeugen ohne schützendes Dach, typischerweise in Cabriolets oder Sportwagen bei einem Überschlag, weil das Fahrzeug über die Überrollkörper abrollt.

Es ist dabei bekannt, einen die gesamte Fahrzeugbreite überspannenden, fest installierten Überrollbügel als Überrollkörper vorzusehen. Bei dieser Lösung wird der erhöhte Luftwiderstand und das Auftreten von Fahrgeräuschen als nachteilig empfunden, abgesehen von der Beeinträchtigung des Fahrzeugaussehens.

Es ist auch bekannt, jedem Fahrzeugsitz einen höhenunveränderlich fest installierten Überrollbügel zuzuordnen. Diese Lösung wird typischerweise bei Sportwagen zur Unterstreichung des sportlichen Aussehens eingesetzt.

Am Markt gewinnen daher bei Cabriolets immer mehr konstruktive Lösungen an Bedeutung bei denen der Überrollkörper im Normalzustand eingefahren ist und im Gefahrenfall, also bei einem drohenden Überschlag, schnell in eine schützende Position ausgefahren wird, um zu verhindern, dass die Fahrzeuginsassen durch das sich überschlagende Fahrzeug erdrückt werden.

Diese Überrollschutzsysteme weisen typischerweise einen in einem fahrzeugfesten Führungskörper geführten U-förmigen oder aus einem Profilkörper gebildeten Überrollkörper auf, wobei der Führungskörper in einem Kassetten-Gehäuse befestigt ist, dieser Überrollkörper wird im Normalzustand gegen die Vorspannkraft einer Antriebs-Druckfeder durch eine Haltevorrichtung in einer unteren Ruhelage gehalten, und ist im Überschlagfall, sensorgesteuert unter Lösen der Haltevorrichtung, durch die Federkraft der Antriebs-Druckfeder in eine obere, schützende Stellung bringbar, wobei eine dann in Wirkeingriff tretende Verriegelungseinrichtung, die Wiedereinfahrsperre, ein Eindrücken des Überrollbügels verhindert. Dabei ist typischerweise jedem Fahrzeugsitz eine Kassette zugeordnet.

Die Haltevorrichtung besitzt dabei typischerweise ein am Überrollkörper befestigtes Halteglied, das in lösbarer mechanischer Wirkverbindung mit einem Auslöseglied an einem sensorgesteuerten Auslösesystem steht, das typischerweise durch einen Auslösemagneten, den so genannten Crashmagneten, oder durch ein pyrotechnisches Auslöseglied, gebildet ist.

Die Verriegelungseinrichtung besteht typischerweise aus einer schwenkbar angelenkten, federvorgespannten Rastklinke mit Zahnsegmenten und einer feststehenden Zahnleiste, einem Rastdom oder dergleichen, wobei ein Verriegelungs-Element mit dem Überrollkörper und das andere fahrzeugfest verbunden ist.

Eine derartige Kassetten-Konstruktion eines Überrollbügelschutzsystems mit einem U-förmigen Überrollbügel zeigt beispielsweise die DE 43 42 400 A1; eine alternative Kassetten-Konstruktion mit einem Überrollkörper in Form eines Profilkörpers zeigt insbesondere DE 198 38 989 C1.

Wegen des beschränkten Bauraumes im Inneren eines üblichen Kraftfahrzeuges kommt der fahrzeugsitzindividuellen Unterbringung der Kassetten der Überrollsysteme eine besondere Bedeutung bei.

Bei den Vordersitzen wird die Kassette typischerweise mit dem Sitzrahmen und den Kopfstützen integriert.

Bei den Fondsitzen sind verschiedene Möglichkeiten bekannt geworden, um das jeweilige Kassetten-Überrollschutzsystem sitzbezogen einzubauen.

Bei dem Cabriolet nach der DE 39 25 513 C2 sind an einer Grundplatte im Abstand der Fondfahrzeugsitze zwei Kassettensysteme vormontiert, wobei die so aufgebaute Baugruppe in einem im Karosseriekörper vorgesehenen Schacht eingeführt und dort befestigt wird.

Zur Erzielung einer gewichts- und bauraumsparenden Bauweise und eines geringeren Montageaufwandes ist durch die DE 199 05 578 A1 eine Lösung bekannt geworden, bei der die Kassetten auf der Trennwand, die den Fahrgastraum vom Kofferraum trennt, montiert, ggf. auch vormontiert, werden, d.h. bei der die Trennwand gleichzeitig als Grund- bzw. Montageplatte für die Kassetten benutzt wird. Die Anbringung der Kassetten ist damit durch die Trennwandausbildung festgelegt, d.h. nicht universell einsetzbar. Femer werden komplette Kassettensysteme montiert, so dass insoweit keine Gewichtsreduktion ermöglicht wird.

Die DE 199 10 007 C1 zeigt eine die Überrollbügel aufnehmende Fahrzeugstruktur, die eine stabile Bodenstruktur und einen dazu vertikal beabstandet fahrzeugfest montierten Querträger ausweist, der Durchtrittsöffnungen für die Schenkel des Überrollbügels besitzt. Diese Konstruktion ist jedoch nur für einen fest und höhenunveränderlich installierten Überrollbügel verwendbar. Sie gibt keine Hinweise für die Montage von ausfahrbaren fahrzeugsitzindividuellen Kassettensystemen.

Die DE 41 00 506 C1 zeigt einen fahrzeugbreiten, ausfahrbaren Überrollbügel, der in einem viereckig geschlossenen, starren, d.h. verwindungssteifen Führungsrahmen geführt aufgenommen ist. Auch diese Konstruktion gibt keine Hinweise für die Montage von ausfahrbaren, fahrzeugsitzindividuellen Kassettensystemen.

Bei der Konstruktion nach der DE 195 01 584 A1 werden komplette fahrzeugsitzindividuelle Kassetten mit ausfahrbaren Überrollbügeln an einem Tragrahmen als vormontiertes Modul befestigt. Diese Konstruktion ist relativ aufwendig und bedingt ein relativ hohes Gewicht.

Die DE 199 43 582 A1 zeigt eine vormontierte Baugruppe mit einer Doppelwandungsstruktur, die im montierten Zustand den Fahrzeuginnenraum von dem Heckbereich trennt, wobei zwischen die beiden Wandungen komplette fahrzeugssitzindividuelle Kassetten mit ausfahrbaren Überrollkörpern eingeschoben und dort befestigt sind.

Die DE 201 03 001 U1 sieht für die Montage von zwei ausfahrbaren Überrollbügeln eine Baueinheit vor, in welche die beiden Überrollbügel integriert sind und die einen in Fahrzeugquerrichtung verlaufenden formsteifen U-förmigen Modulträger aufweist. Diese Baueinheit, in der auch die üblichen Zusatzkomponenten für die Überrollbügel wie Federspeicher, Haltevorrichtung, Aktuator und Verriegelungseinrichtung untergebracht sind, wird an der Trennwand angebracht, die Führungssicken für die Schenkel der Überrollbügel aufweist.

Diese bekannte Konstruktion ist daher an die Trennwand gebunden.

Aufgabe der Erfindung ist es, eine Basisbaueinheit für die Aufnahme von zwei sitzbezogen, nebeneinander angeordneten, aufstellbaren Überrollkörpern zu schaffen, die universell für die verschiedenen Rohbaustrukturen einsetzbar ist, und die einen hohen Integrationsgrad für die Komponenten zum Aufstellen der Überrollkörper ermöglicht.

Die Lösung dieser Aufgabe gelingt durch eine Baueinheit, ausgebildet für die Aufnahme von zwei nebeneinander, sitzbezogen angeordneten, aufstellbaren Überrollkörpern eines Überrollschutzsystems für Kraftfahrzeuge, bestehend aus einer Rahmenkonstruktion von Profilteilen mit mindestens zwei sich über die Innenbreite des Fahrzeuges erstreckenden Profil-Quertraversen, die vertikal beabstandet in Verbindung mit Führungselementen zu einem Führungskörper für die Überrollkörper verbunden sind und an denen im Bereich der Überrollkörper sich vertikal nach unten erstreckende Profil-Trägerelemente für die Aufnahme von Komponenten des Überrollschutzssystems fest angebracht sind.

Die erfindungsgemäße modulartig aufgebaute Rahmenkonstruktion weist eine Reihe von Vorteilen auf
- Bauraum und Gewichtseinsparung, da wegen des hohen Integrationsgrades Verzicht auf Einzelkassetten möglich ist,
- die Baueinheit lässt sich zur besseren Krafteinleitung formschlüssig in die Rohbaustruktur integrieren
- die Baueinheit ist universell einsetzbar und erweiterbar.

Ausgestaltungen der Erfindung sind in Unteransprüchen gekennzeichnet und ergeben sich auch aus der Figurenbeschreibung.

Anhand von drei in den Zeichnungen dargestellten Ausführungsbeispielen wird die Erfindung näher beschrieben.

Es zeigen:
- Fig.1: in einer schematisierten isometrischen Darstellung eine Basiseinheit für die Aufnahme von zwei nebeneinander angeordneten, aufstellbaren Überrollbügeln in Form einer Rahmenkonstruktion aus Profilteilen, mit Profil-Führungselementen aus einem Kastenprofil zur Führung der Überrollbügel sowie Profil-Trägerelemente zur Aufnahme von Komponenten des Überrollsystems mit nach außen abgekanteten Profilen,
- Fig. 2: die Rahmenkonstruktion nach Fig. 1, jedoch mit U-förmigen Profil-Führungselementen und nach innen abgekanteten Profilen für die Trägerelemente, und
- Fig. 3: eine Rahmenkonstruktion nach Fig. 2, jedoch ausgebildet für die Aufnahme eines Profil-Überrollkörpers.

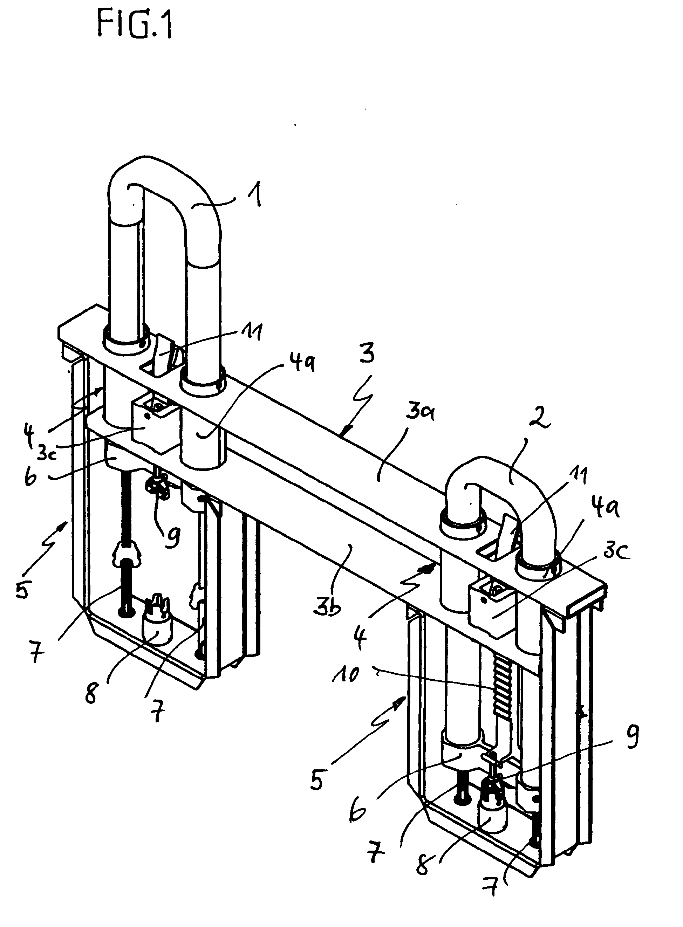

Die Figuren 1 bis 3 zeigen jeweils eine Basiseinheit für die Aufnahme von zwei nebeneinander angeordneten ausfahrbaren Überrollbügeln 1, 2, die jeweils einem Fahrzeugsitz zugeordnet sind. Diese Basiseinheit ist universell für die verschiedenen Rohbaustrukturen eines Kraftfahrzeuges einsetzbar, d.h. sie ist nicht zwingend an die Befestigung an der Trennwand gebunden.

Diese Basiseinheit weist jeweils eine stabile, verwindungssteife Rahmenkonstruktion aus Profilteilen auf, nämlich zwei sich im wesentlichen quer zur Fahrtrichtung über die Fahrzeugbreite erstreckende vertikal beabstandet angeordnete Profil-Führungselemente, d.h. Profil-Quertraversen 3 mit Führungselementen 4 für den jeweiligen Überrollkörper 1, 2, sowie im Bereich der Überrollkörper 1, 2 an den Quertraversen 3 fest angebrachte, aus abgekanteten Profilen zusammengesetzte Trägerelemente 5 für die anderen Komponenten eines aufstellbaren Überrollkörpersystems.

Durch diese Verbindung von Profil-Quertraversen mit Führungselementen für Überrollbügel, die einen Führungskörper bilden, und Profil-Trägerelementen für die anderen Komponenten des Überrollsystems entsteht ein Grundkorpus für ein Überrollschutzsystem.

Diese Baugruppe bildet die Grundeinheit für ein Überrollschutzsystem, das je nach Fahrzeugstruktur um weitere Bauteile erweitert werden kann, die dann entsprechend im Fahrzeugrohbau entfallen können. Beispielsweise könnte diese Baueinheit mit einer Abdeckplatte von hinten verschlossen werden, wenn der Fahrzeugrohbau keine Abdeckung für den Gepäckraum vorsieht. Weiterhin könnten Bauteile für die Aufnahme einer Skisackhalterung zwischen den beiden Trägerelementen adaptiert werden.

Durch den modularen Aufbau der Rahmenkonstruktion aus Profilteilen lassen sich auf einfache Weise Grundrahmen variabel, angepasst an den jeweiligen Fahrzeugtyp, zusammensetzen, mit einem hohen Integrationsgrad der aufstellbaren Überrollschutzsysteme in den Grundrahmen, d.h. die sonst üblichen Kassettenteile sind entbehrlich.

Die Variante der Basiseinheit nach Fig. 1 zeigt zwei übliche Überrollbügel 1, 2, deren Schenkel am freien Ende jeweils über eine Quertraverse 6 miteinander verbunden sind. Die Quertraversen 3 der Profilführungselemente bestehen aus zwei vertikal im Abstand angeordneten Kastenprofilen 3a, 3b, die den fahrzeugfesten Führungskörper für den Überrollbügel bilden. In entsprechende Öffnungen der Kastenprofile eingesetzte und dort befestigte Führungsbuchsen 4a, in welche vorzugsweise Kunststoff-Gleitkörper eingesetzt sind, dienen dabei der sicheren Führung des jeweiligen Überrollbügels. Im Bereich des Überrollbügels ist jeweils das Trägerelement 5, das aus nach außen abgewinkelten Profilteilen zusammengesetzt ist, mit den beiden Kastenprofil-Quertraversen 3a, 3b fest verbunden, insbesondere verschweißt, ebenso wie vorzugsweise die Führungsbuchsen 4a in den Öffnungen der Quertraversen eingeschweißt sind.

Die Profilteile der Quertraversen und der Trägerelemente sind aus Gewichtsgründen vorzugsweise Leichtmetallstrangpressprofile; sie können jedoch auch aus einem anderen Metall oder aus faserverstärktem Kunststoff sein.

Auf den Trägerelementen 5 sind übliche andere Komponenten des Überrollsystems angebracht, z.B., wie dargestellt, zwei Federführungsbolzen 7 für die Druck-Aufstellfedem, ein sensorgesteuerter Aktuator 8 mit auslösbarer Haltevorrichtung 9 für das Niederhalten des Überrollbügels gegen die Vorspannkraft der Aufstell-Druckfeder im Grundzustand (rechter Bügel 2). Die Verriegelungseinrichtung für die Wiedereinfahrsperre des Überrollbügels im aufgestellten Zustand (linker Bügel 1), besteht aus einer an der Bügel-Quertraverse 6 befestigten Zahnstange 10 und einer an einem Aufbau 3c an der unteren Führungsquertraverse 3b fahrzeugfest angelenkten Sperr- bzw. Verriegelungsklinke 11.

Die Funktion des dargestellten Überrollbügelsystems ist bekannt und braucht daher nicht näher erläutert zu werden.

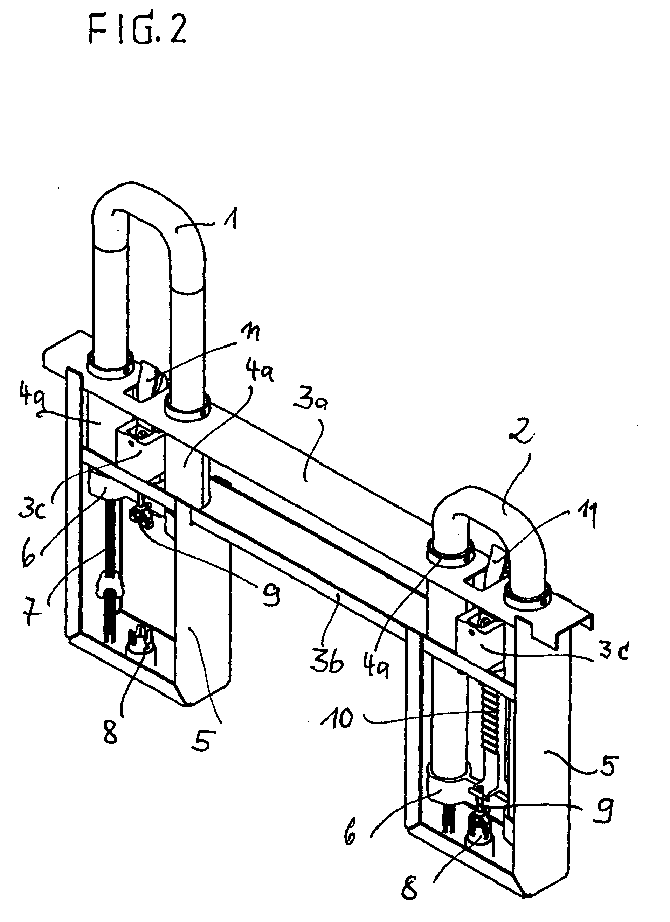

Die Fig. 2 zeigt eine Rahmenkonstruktion entsprechend Fig. 1 für die Aufnahme von zwei nebeneinander angeordneten Überrollbügelsystemen 1, 2, bei der die beiden Führungs-Quertraversen 3a, 3b jedoch nicht durch ein Kastenprofil, sondern durch ein U-Profil gebildet sind, mit seitlich vertikal abgekanteten Schenkeln. Ferner sind die Profile der Trägerelemente 5 nach innen abgekantet, d.h. sie bilden eine Art Box ohne abstehende Kanten. Im Übrigen sind die Komponenten gleich denen in Fig. 1, was auch durch die Gleichheit der Bezugsziffern zum Ausdruck kommt.

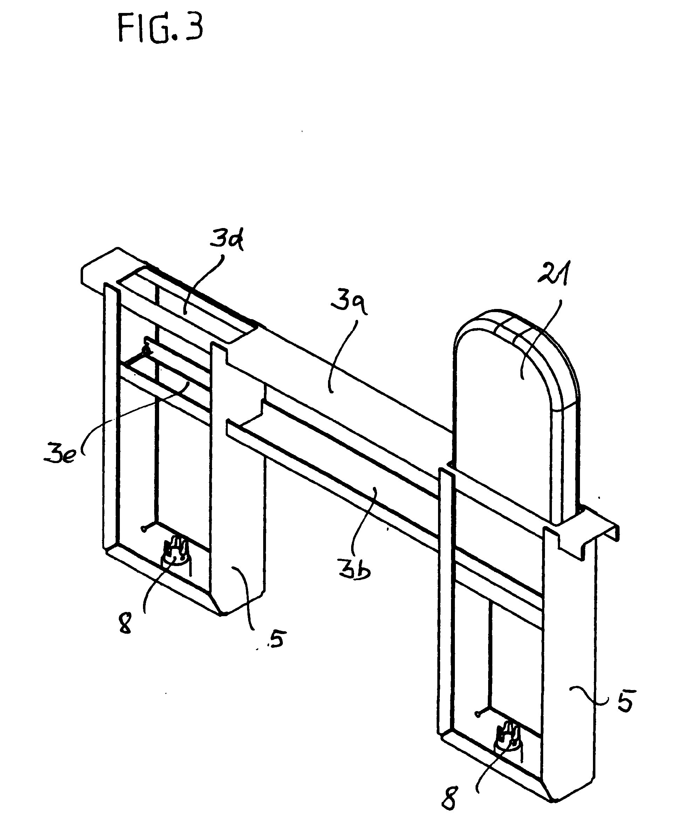

Während in den Figuren 1 und 2 die Überrollkörper als U-förmige Überrollbügel ausgebildet sind, ist in Fig. 3 eine Rahmenkonstruktion für die geführte Aufnahme eines Profil-Überrollkörpers 12 schematisch dargestellt, die im Prinzip bis auf den Führungsteil, der entsprechende Ausschnitte 3d, 3e in den Profil-Quertraversen 3a, 3b vorsieht, der Rahmenkonstruktion mit U-Profilen nach Fig. 2 entspricht. Die Halte-Verriegelungseinrichtung für den aufstellbaren Profil-Überrollkörper 12 ist nicht dargestellt. Sie folgt bekannten Konstruktionsprinzipien.

## Patentansprüche

1. Baueinheit, ausgebildet für die Aufnahme von zwei nebeneinander, sitzbezogen angeordneten, aufstellbaren Überrollkörpern eines Überrollschutzsystems für Kraftfahrzeuge, bestehend aus einer Rahmenkonstruktion von Profilteilen mit mindestens zwei sich über die Innenbreite des Fahrzeuges erstreckenden Profil-Quertraversen (3a, 3b), die vertikal beabstandet in Verbindung mit Führungselementen (4) zu einem Führungskörper für die Überrollkörper (1, 2, 21) verbunden sind und an denen im Bereich der Überrollkörper sich vertikal nach unten erstreckende Profil-Trägerelemente (5) für die Aufnahme von Komponenten (7, 8) des Überrollschutzssystems fest angebracht sind.

2. Baueinheit nach Anspruch 1, **dadurch gekennzeichnet, dass** die Profil-Quertraversen (3a, 3b) aus einem Kastenprofil bestehen.

3. Baueinheit nach Anspruch 1, **dadurch gekennzeichnet, dass** die Profil-Quertraversen (3a, 3b) aus einem U-Profil bestehen.

4. Baueinheit nach einem der Ansprüche 1 bis 3, **dadurch gekennzeichnet, dass** die Profil-Trägerelemente (5) aus drei U-Profilstücken rechteckförmig zusammengesetzt sind, die an der offenen Seite fest an den Profil-Quertraversen (3a, 3b) angebracht sind.

5. Baueinheit nach einem der Ansprüche 1 bis 4, **dadurch gekennzeichnet, dass** in den Öffnungen in den Profil-Quertraversen (3a, 3b), in denen die Überrollkörper (1, 2, 21) aufgenommen sind, Führungselemente (4) angebracht sind.

6. Baueinheit nach Anspruch 5, **dadurch gekennzeichnet, dass** die Führungselemente (4) jeweils durch eine Führungsbuchse gebildet sind, die zumindest im Raum zwischen den vertikal beabstandeten Quertraversen (3a, 3b) an diesen Quertraversen fest angebracht sind.

7. Baueinheit nach einem der Ansprüche 1 bis 6, **dadurch gekennzeichnet, dass** die Baueinheit zumindest auf einer Seite mit einer Abdeckplatte versehen ist.

8. Baueinheit nach einem der Ansprüche 1 bis 7, **dadurch gekennzeichnet, dass** an der Baueinheit eine Skisackhalterung adaptiert ist und eine Durchlademöglichkeit adaptiert ist.

9. Baueinheit nach einem der Ansprüche 1 bis 8, **dadurch gekennzeichnet, dass** an den Tragelementen (5) Komponenten (8, 9) der Vorrichtung zum auslösbaren Niederhalten der Überrollkörper (1, 2, 21) in der Grundstellung sowie die Energiespeicher zum Aufstellen des Überrollkörpers im Überrollfall befestigt sind.

10. Baueinheit nach einem der Ansprüche 1 bis 9, **dadurch gekennzeichnet, dass** an einer der beiden Quertraversen (3a, 3b) eine Sperrklinke (11) zum Verriegeln des aufgestellten Überrollkörpers angebracht ist.

## Claims

1. Modular unit designed to hold two rollover bodies, which are arranged next to one another relative to the seats and are deployable, of a rollover protection system for motor vehicles, comprising a frame structure of profiled parts having at least two profiled cross pieces (3a, 3b) which extend over the inner width of the vehicle, which are connected with vertical spacing and in conjunction with guide elements (4) to form a guide body for the rollover bodies (1, 2, 21), and to which vertically downwardly extending profiled carrier elements (5), for holding components (7, 8) of the rollover protection system, are fixedly attached in the region of the rollover bodies.

2. Modular unit according to Claim 1, **characterized in that** the profiled cross pieces (3a, 3b) comprise a box-shaped profile.

3. Modular unit according to Claim 1, **characterized in that** the profiled cross pieces (3a, 3b) comprise a U-shaped profile.

4. Modular unit according to one of Claim 1 to 3, **characterized in that** the profiled carrier elements (5) are composed, in a rectangular form, of three U-shaped profiled pieces which are fixedly attached at the open side to the profiled cross pieces (3a, 3b).

5. Modular unit according to one of Claims 1 to 4, **characterized in that** guide elements (4) are attached in the openings in the profiled cross pieces (3a, 3b) in which the rollover bodies (1, 2, 21) are held.

6. Modular unit according to Claim 5, **characterized in that** the guide elements (4) are each formed by a guide bush attached fixedly to the vertically spaced cross pieces (3a, 3b) at least in the space between these cross pieces.

7. Modular unit according to one of Claims 1 to 6, **characterized in that** the modular unit is provided with a cover plate on at least one side.

8. Modular unit according to one of Claims 1 to 7, **characterized in that** a ski bag holder and load-through facility are adapted to the modular unit.

9. Modular unit according to one of Claims 1 to 8, **characterized in that** components (8, 9) of the device for detachably retaining the rollover bodies (1, 2, 21) in the basic position and the energy stores for deploying the rollover body in the event of a rollover are fastened to the carrier elements (5).

10. Modular unit according to one of Claims 1 to 9, **characterized in that** a blocking catch (11) for locking the deployed rollover body is attached to one of the two cross pieces (3a, 3b).

## Revendications

1. Unité modulaire, conçue pour recevoir deux arceaux de sécurité relevables, disposés en juxtaposition en étant associés à des sièges, d'un système de protection au retournement pour véhicules automobiles, constituée d'une structure de cadre en éléments profilés avec aux moins deux traverses profilées (3a, 3b) s'étendant sur la largeur intérieure du véhicule, qui sont assemblées à distance verticale, en liaison avec des éléments de guidage (4), à un corps de guidage pour les arceaux de sécurité (1, 2, 21), et auxquelles sont fixement assemblés, dans la région des arceaux de sécurité, des éléments porteurs profilés (5) s'étendant verticalement vers le bas, destinés à recevoir des composants (7, 8) du système de protection au retournement.

2. Unité modulaire selon la revendication 1, **caractérisée en ce que** les traverses profilées (3a, 3b) sont constituées d'un profilé en caisson.

3. Unité modulaire selon la revendication 1, **caractérisée en ce que** les traverses profilées (3a, 3b) sont constituées d'un profilé en U.

4. Unité modulaire selon l'une quelconque des revendications 1 à 3, **caractérisée en ce que** les éléments porteurs profilés (5) sont composés de trois tronçons de profilés en U à angles droits qui sont fixement assemblés sur leur côté ouvert aux traverses profilées (3a, 3b).

5. Unité modulaire selon l'une quelconque des revendications 1 à 4, **caractérisée en ce que** des éléments de guidage (4) sont installés dans les ouvertures, pratiquées dans les traverses profilées (3a, 3b), dans lesquelles sont reçus les arceaux de sécurité (1, 2, 21).

6. Unité modulaire selon la revendication 5, **caractérisée en ce que** les éléments de guidage (4) sont chacun formés par une douille de guidage qui, au moins dans l'espace entre les traverses verticalement distantes (3a, 3b), est fixement assemblée à ces traverses.

7. Unité modulaire selon l'une quelconque des revendications 1 à 6, **caractérisée en ce que** l'unité modulaire est pourvue d'une plaque de recouvrement au moins sur un côté.

8. Unité modulaire selon l'une quelconque des revendications 1 à 7, **caractérisée en ce qu'**un support de sac à skis et une possibilité de chargement sont adaptés sur l'unité modulaire.

9. Unité modulaire selon l'une quelconque des revendications 1 à 8, **caractérisée en ce que** sont fixés sur les éléments porteurs (5) des composants (8, 9) du dispositif pour le maintien libérable des arceaux de sécurité (1, 2, 21) dans la position de base, ainsi que les accumulateurs d'énergie pour relever l'arceau de sécurité en cas de retournement.

10. Unité modulaire selon l'une quelconque des revendications 1 à 9, **caractérisée en ce qu'**un cliquet d'arrêt (11) est installé sur une des deux traverses (3a, 3b) pour verrouiller l'arceau de sécurité relevé.
